Europäisches Patentamt

(19) European Patent Office

Office européen des brevets

(11) Publication number: **0 006 269**
**A1**

(12) # EUROPEAN PATENT APPLICATION

(21) Application number: 79200298.2

(22) Date of filing: 09.06.79

(51) Int. Cl.³: **G 11 B 5/12, G 11 B 5/28**
**// G11B5/42**

(30) Priority: 19.06.78 US 916652

(43) Date of publication of application: 09.01.80
Bulletin 80/1

(84) Designated Contracting States: DE FR GB NL

(71) Applicant: SPIN PHYSICS INC., 3099 Science Park
Road, San Diego, California 92121 (US)

(72) Inventor: Griffith, Neil John, 3099 Science Park Road,
San Diego, California 92121 (US)

(74) Representative: Mestre, Jean, KODAK-PATHE 30, rue
des Vignerons, F-94300 Vincennes (FR)

(54) **Elements for magnetic heads, magnetic heads manufactured with these elements, methods for producing both.**

(57) High density multitrack magnetic heads are batch-
fabricated from a stack of non-magnetic wafers (10) which
are photolithographically processed to provide lands
(62a–d, 88a–b) and recessed structures (64, 90) in the
wafers. Magnetic layers (76, 94) are deposited within the
recessed structures and, within some of the grooves, coils
(70) inductively coupled to the magnetic layers are also
deposited. The combined thickness of the magnetic layers
and coils or of the layers themselves is less than the depth
of the recessed structures, with the wafer lands serving
both to provide track-to-track spacing and to protect the
magnetic layers from magnetostriction producing stresses.
A selected number of grooved wafers are bonded together,
sliced and then processed as generally done in the art to
produce a plurality of multitrack magnetic heads.

TITLE MODIFIED
see front page

- 1 -

Subassemblies for magnetic head, use of these subassemblies for manufacturing magnetic heads and method therefor.

This invention relates to a multitrack magnetic head and a manufacturing method therefor.

High density magnetic recording as employed, for example, in the recording of video information is usually done by means of a single head which rapidly traverses a magnetic tape. To eliminate the high relative head to tape speed required with single heads, multi-track magnetic heads have been developed which simultaneously record a plurality of "lines" of image signals in parallel on a relatively slow moving elongate tape. High density, multi-track heads can be made manually, but the process is slow, expensive and the yield is low.

U.S. Patent No 3,986,210 to Sugaya et al discloses a method for manufacturing multitrack magnetic heads readily and precisely utilizing photoetching techniques. One disadvantage of the Sugaya et al process is that the magnetic portions of the heads are formed on top of a semiconductor substrate. The magnetic head portions are, therefore, subject to magnetostriction which can result in the various heads of a multitrack head having different performance characteristics. Another disadvantage of the Sugaya et al method is that a different set of masks is required for each size of head to be manufactured. That is to say, a 100 track head requires 1 set of masks and a 200 track head requires a second, different set of masks.

It is the object of the present invention to provide a remedy to the aforementioned disadvantages of the prior art. The invention solves the problem of how to make a subassembly for use in a multitrack head that is not subject to magnetostrictive effects.

The method of manufacturing a subassembly for use in a magnetic head, according to the invention, includes the step of photolithographically processing a non-magnetic wafer to provide a layer of magnetic material and conductive leads on opposing sides of the magnetic material layer, the leads on one side being connected to the leads on the other side to form a coil inductively coupled to the magnetic material layer, and comprises the steps of photolithographically forming a recessed structure of predetermined depth in said wafer, forming the layer of magnetic material and the coil in said recessed structure, the combined thickness of the magnetic material layer and the coil being less than said predetermined depth and filling the recessed structure by applying a non-conductive, non-magnetic material on the coil and the magnetic material layer.

The subassemblies for magnetic head including a layer of magnetic material forming a core and at least a coil inductively coupled to the core, according to the invention, comprise a layer of magnetic material and a coil which are located within a recessed structure formed in a non-magnetic wafer, the combined thickness of said layer of magnetic material and said coil being less than the depth of said recessed structure.

These subassemblies are used for manufacturing a multitrack head in such a way that they are oriented in a direction according to which the electrical contacts to each of the coils are made to the same side of said multitrack head.

In a preferred embodiment of the method of the present invention the wafer contains the parts of several discrete heads. A selected number of grooved wafers are bonded together, sliced into multitrack subassemblies and lapped to reveal the magnetic head parts. The subassemblies are then paired and bonded together with a non-magnetic gapping material there-between to produce a plurality of multitrack heads. One advantage of the preferred embodiment of the method of the present invention is that it provides batch fabrication of multitrack magnetic heads. Another advantage is that different sized heads can be manufactured simply by stacking and bonding together an appropriate number of wafers.

One advantage of such heads over prior art devices is that the grooved structure serves to cradle the active magnetic parts so that these parts are not subject to magnetostriction. Another advantage is that the lands adjacent each recess provide precise and uniform track-to-track spacing.

The present invention will now be described, by way of example, with reference to the accompanying drawings, in which :

Fig. 1 is a perspective exploded view of a stack of wafers ;

Fig. 2 is a perspective view of sections formed from the wafer stack depicted in Fig. 1 ;

Figs. 3, 4 and 5 are perspective views, partially cut away, illustrating successive steps in the manufacture of multitrack heads according to the invention ;

Fig. 6 is a perspective exploded view illustrating a multitrack head embodying the invention ;

Figs. 7a and 7b are plan and side views, respectively, of a connector adapted for use with the head depicted in Fig. 6 ;

Fig. 8 depicts schematically the successive steps employed to fabricate one pole piece for use in a multitrack head according to the invention ;

Fig. 9 depicts schematically the successive steps employed to fabricate a second pole piece for use in a multitrack head according to the invention ;

Fig. 10 is a view illustrating the contoured shape of a multitrack head embodying the invention ; and

Fig. 11 depicts an alternative multitrack head embodying the invention.

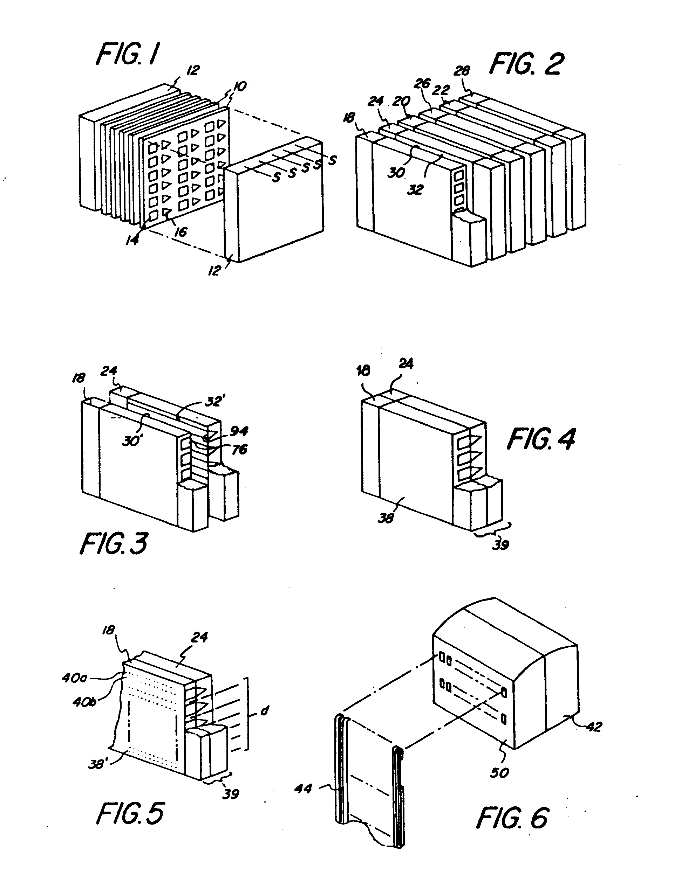

Addressing first the batch fabrication aspect of the invention, reference should be had to Fig. 1 which shows a stack of identical non-magnetic substrates hereinafter called wafers 10 arranged between end plates 12. Each wafer (wafers typically are one inch or 2.54 centimeters square and lapped to about .0025 inches or .00635 centimeters thick) supports the parts 14, 16 for eighteen multitrack heads. The parts 14, as will appear below, are coil-supporting core halves ; and the parts 16 are core halves for

- 4 -

completing the magnetic circuits associated with the core halves 14. The wafers 10, which are of equal and uniform thickness, are ceramic (e.g., Forsterite ; or Fotoceram available from Corning Glass Corp., Corning, New York), although other suitable non-magnetic materials could be used. After stacking, the wafers 10 and end plates 12 are bonded together, e.g. by epoxy, into the form of a block. The block is then sliced along five slice lines S to form the six pieces depicted in Fig. 2.

Of the six pieces in Fig. 2, three (18, 20,22) contain core halves 14, and three (24, 26, 28) contain core halves 16. Taking appropriately paired pieces (e.g.the pieces 18, 24), the respective faces (30, 32) of such pieces are lapped to reveal magnetic pole pieces (76, 94) emanating from the lapped faces 30', 32'. See Fig. 3.

After depositing a gapping material, e.g. SiO, over one or both lapped faces 30', 32', the pieces 18, 24 are brought into face-to-face abutting contact and bonded together (e.g. by epoxy) to form a stack 39 for forming six multitrack heads. See Fig. 4.

Next, the face 38 of the stack 39 is lapped to reveal contacts 40a, 40b (Fig. 5) for lead connections to the coils associated with the core halves 14. This feature will be described in greater detail later. Then, the stack 39 is sliced along lines d (Fig. 5) into six multitrack heads, which are thereafter contoured into multitrack heads (42) as depicted in Fig. 6.

(In like manner the paired pieces 20, 26 and 22, 28 are similarly processed into twelve additional multi-track heads for a total of eighteen multitrack heads).

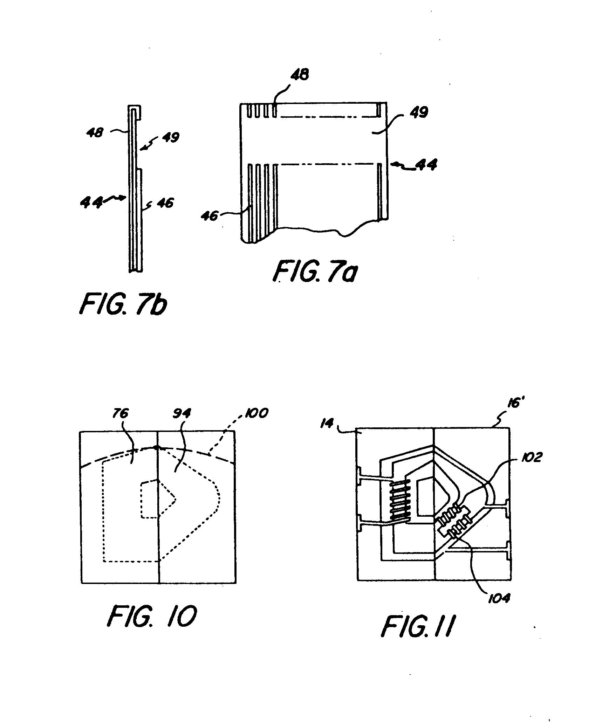

Electrical connection is made to the exposed contacts 40a, 40b of the multitrack head 42 by means of a connector 44. The connector 44 has conductor leads 46, 48 photoetched out of conductive coatings on opposite faces of a strip of plastic, the leads 48 extending to the same strip face 49 that supports the leads 46. (See Figs. 7a and 7b). Thus , since the contacts 40a and 40b are on the same side 50 of the head 42, connection to, say the 800 contacts of 400 discrete heads which form the multitrack head 42, may be easily and simultaneously made by properly aligning and bringing the connector face 49 into bonding contact against the head side 50.

Bearing in mind that all of the core halves 14, 16 on a given wafer 10 are simultaneously formed, the process of fabricating a core half 14 and a core half 16 will now be described in detail with respect to Figs. 8 and 9 :

CORE HALF 14 (Fig. 8)

Starting with a raw wafer 10, and using conventional photolithography, the mask 60 of a core half 14 is formed on the top of the wafer 10. The mask 60 and the others to which reference is made later on, are shown as being self-supporting on the drawings but it is clear that it is only for the purposes of clarity and convenience of the description and practically such masks are of a type conventional in the customarily used photolithography technology. After etching through the mask windows, lands 62a, b, c, d, and a recess 64 of predetermined depth, are formed. Again using photolithography, a mask 66 is formed on the top of the wafer 10 ; and thereafter, by etching through the windows of the mask 66, cross-grooves 68 for forming a coil 70 are etched within the recess 64. Then, without removing the (photoresist) mask 66, the etching process is halted (e.g. by rinsing the wafer in distilled water), after which copper or aluminum is deposited through the windows of the mask 66 to fill the coil cross-grooves 68, as well as lead grooves 72. The mask 66 is then conventionally removed and the processed face of the wafer 10 coated with SiO.

Next, a mask 74 for defining the shape of the magnetic pole piece 76 of the core half 14 is photolithographically formed on the top of the wafer 10. The magnetic pole piece 76 is built by depositing, e.g. by sputtering or vacuum-depositing, an amorphous film of permalloy P or the like through the window of the mask 74. In this regard, it is best to deposit, alternately, coatings of permalloy and insulating material (e.g. SiO) within the recess 64,

0006269

- 6 -

thereby to reduce the tendency of the pole piece 76 to form eddy currents therein.

A mask 78 covering the pole piece 76 is photolithographically formed on the top of the wafer 10. After etching, copper or aluminum, as appropriate, is deposited through the mask 78 windows, thereby to ready the wafer 10 for completion of its coil 70. The mask 78 is conventionally removed, the processed face of the wafer 10 is coated with SiO and a mask 80 is photolithographically formed on the top of the wafer. Copper or aluminum, as appropriate, is deposited through the mask 80 windows to complete the coil 70 wrapped about the pole piece 76, the combined thickness i.e. the addition of the thicknesses of the coil 70 and pole piece 76 being less than the depth of the recess 64.

Non-conductive, non magnetic SiO 82 is then deposited over the whole processed face of the wafer 10, after which a thin film 84 of permalloy is (preferably) sputtered or vacuum deposited over the SiO coating. The magnetic film 84 serves to isolate the pole piece 14 from other pole pieces when the wafer 10 is stacked with other wafers.

### CORE HALF 16 (Fig. 9)

The core half 16 is created in a similar, but simpler, process than that used in connection with the core half 14 : Starting with a wafer 10, a mask 86 is photolithographically formed on the top of the wafer 10, etching through the mask window serving to form lands 88a and 88b, and a recess 90 of predetermined depth. A mask 92 is again formed on the top of the wafer ; and then permalloy P or the like is sputtered or vacuum-deposited into the recess 90 through the window of the mask 92, thereby to form the pole piece 94 of the core half 16. A coating of SiO 96, as was the case with the core half 14, is applied to cover the magnetic pole piece 94 ; and then a thin magnetic coat 98 is (preferably) sputtered or vacuum-deposited over the whole processed surface of the wafer 10.

Referring now to Fig. 10, a discrete head is formed (as otherwise detailed above in connection with

- 7 -

Figs. 1-5) by bringing the pole pieces 76, 94 in abutting
end-to-end contact; and then contouring along a contour
line 100.

It will be appreciated that by virtue of the
land-and-recess structure of the wafers 10 the primary
track-to-track spacings are established by the wafer lands
when such wafers are stacked to form multitrack heads. And,
because the pole pieces 76, 94 reside totally within recesses, they cannot be subjected to stacking stress ; and
attendantly they are not subject to magnetostrictive effects
either.

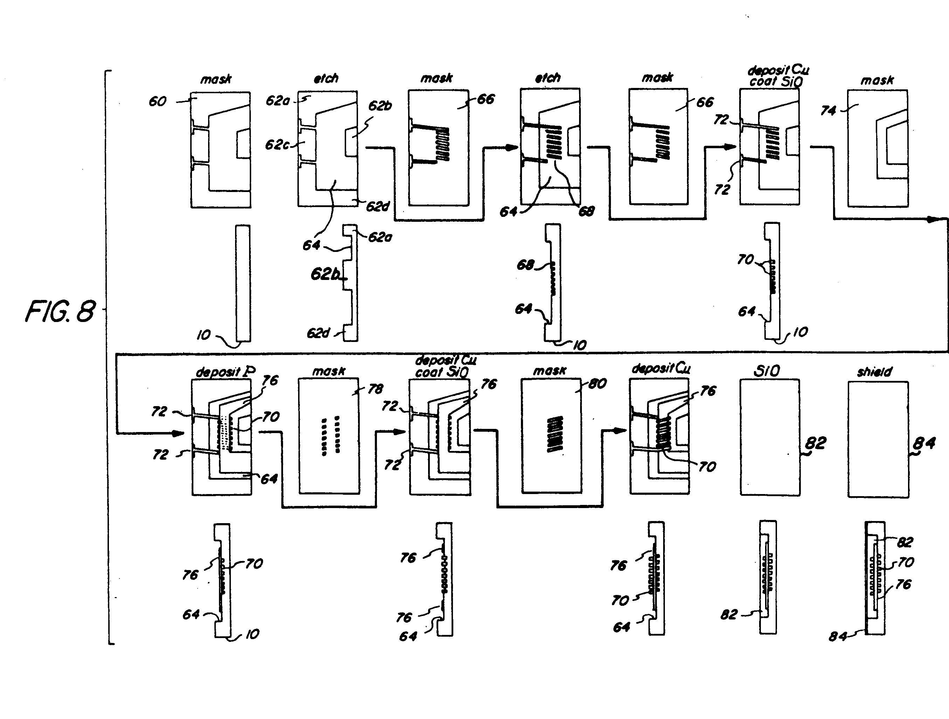

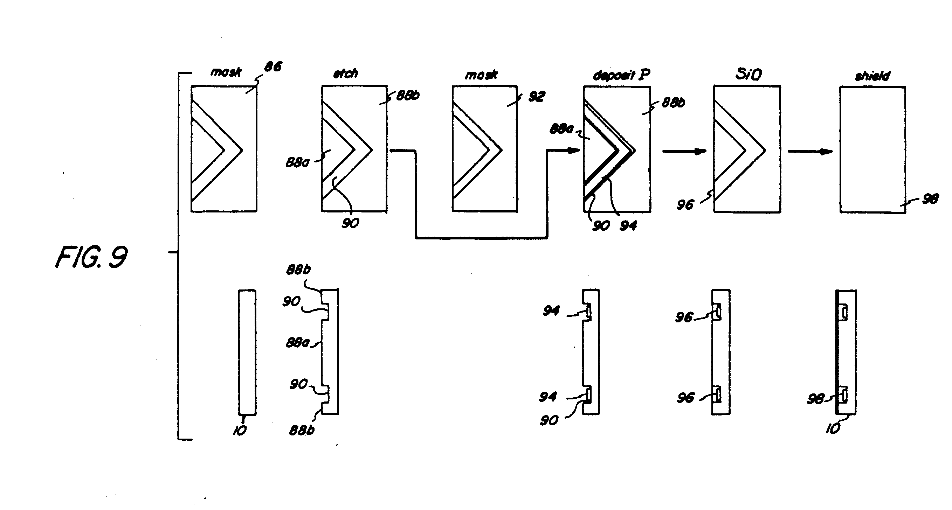

The invention has been described in detail with
particular reference to a preferred embodiment thereof,
but it will be understood that variations and modifications
can be effected within the spirit and scope of the invention. For example, although the invention has been described in the form of a head dependent on flux rate change,
a flux gate or similar type of head may employ the invention
as well. Fig. 11 shows one such head in which the core
half part(s) 14 is complemented by a core half part(s) 16',
the latter being formed with control and sense coils 102,
104 as described generally in connection with Fig. 8. Further,
while integral heads are formed as in Figs. 8 and 9, it
will be appreciated that the invention may be used to form
separate core half part structures -- as may be preferred -- so that when the tape-contracting front structure
wears out , it may be replaced relatively easily. This
results from the fact that head parts are splittable perpen-
dicularly to the gap.

- 8 -
CLAIMS

1 - A method of manufacturing a subassembly for use in a magnetic head, the method including the step of photolithographically processing a non-magnetic wafer to provide a layer of magnetic material and conductive leads on opposing sides of the magnetic material layer, the leads on one side being connected to the leads on the other side to form a coil inductively coupled to the magnetic material layer, said method being characterized by the steps of photolithographically forming a recessed structure (64-90) of predetermined depth in said wafer (10), forming the layer (76-94) of magnetic material and the coil (70,102,104) in said recessed structure, the combined thickness of the magnetic material layer and the coil being less than said predetermined depth and filling the recessed structure by applying a non-conductive, non-magnetic material (82, 96) on the coil and the magnetic material layer.

2 - The method of claim 1, characterized in that said layer of magnetic material is formed by alternately forming films of magnetic and non-magnetic materials.

3 - Method according to any of claims 1 and 2 for producing a multitrack magnetic head characterized by the additional steps of :

      (a) stacking a plurality of processed wafers so that the corresponding parts of respective wafers align with each other ;

      (b) bonding the stack of wafers together ;

      (c) slicing the bonded stack into multitrack subassemblies ;

      (d) lapping the subassemblies to reveal the magnetic head parts within said subassemblies ;

      (e) pairing said subassemblies ; and

      (f) bonding said paired subassemblies together with a non-magnetic gapping material therebetween.

4 - Subassemblies for magnetic head including a layer of magnetic material forming a core and at least a coil inductively coupled to the core, said subassemblies being characterized in that the layer of magnetic material (76,94) and the coil (70,102,104) are located within a recessed structure (64,90) formed in a non-magnetic wafer (10),the combined thickness of said layer of magnetic material and said coil being less than the depth of said recessed structure.

5 - Subassemblies of claim 4 characterized in that said magnetic layer comprises a film of amorphous magnetic material.

6 - Subassemblies according to any of claims 4 and 5 characterized in that said magnetic layer comprises alternating films of magnetic and non-magnetic materials.

7 - Subassemblies according to any of claims 4, 5 and 6 for making a magnetic head characterized in that two wafers are bonded together, the recessed structure of the first wafer and the recessed structure of the second wafer being so disposed with respect to each other that respective cores are formed comprising individual magnetic layers of said first and second wafers with non-magnetic gapping material therebetween.

8 - Subassemblies according to any of claims 4 to 7 characterized in that at least some of the wafers have a non-magnetic coating disposed on the contents of their respective recessed structure.

9 - Subassemblies according to any of claims 4 to 7 characterized in that at least some of the wafers have a magnetic coating covering substantially all of at least one of their respective faces.

10 - Subassemblies according to any of claims 4 to 9 characterized in that the recessed structure of at least some of said wafers includes lead-grooves, in that a lead is deposited within said lead-grooves, and in that two of the lead-grooves of the respective wafers extend to the same respective edges of such wafers.

11 - Use of subassemblies according to claim 10 for manufacturing a multitrack head characterized in that the subassemblies are oriented in a direction according to which the electrical contacts to each of the coils are made to the same side of said multitrack head.

0006269

1 / 4

FIG. 1

FIG. 2

FIG. 3

FIG. 4

FIG. 5

FIG. 6

FIG. 7b

FIG. 7a

FIG. 10

FIG. II

FIG. 8

FIG.9

0006269

European Patent
Office

**EUROPEAN SEARCH REPORT**

Application number

EP 79 20 0298

| Category | DOCUMENTS CONSIDERED TO BE RELEVANT | | CLASSIFICATION OF THE APPLICATION (Int. Cl.³) |
|---|---|---|---|
| | Citation of document with indication, where appropriate, of relevant passages | Relevant to claim | |

US - A - 3 672 043 (TRIMBLE et al.)     1,4,5
* From column 1, line 63 to column 8
2, line 33; column 3, lines
11-29, 35-45 and from line 72 to
column 4, line 19 and lines
50-75; figures 1,2,7,8,11,12,16,
17,18,19,20,21,23,24 *

--

US - A - 3 895 391 (KONISHI)     1,4,8
* Column 1, lines 29-33 and from
line 66 to column 2, line 4;
lines 24-62; column 3, lines
36-46 and from line 66 to
column 4, line 56; column 5,
lines 22-27 and 38-40;
figures 1-5, 7A,7B and 8 *

--

DE - A - 2 104 445 (NAGAO)     1,4,5
* Page 6, lines 3-7; from      7
page 7, line 11 to page 8,
line 17; figures 4a,4b,5 *

--

US - A - 3 613 228 (COOK et al.)     3,10,
* Column 3, lines 6-16 and
25-59; figures 1,3,5,6,10,11,
12,13,14,15 *

--

ELECTRONICS INTERNATIONAL,     5
vol. 50, no. 5, 3 March 1977,
New York, N.Y. USA
T.A. ROSCAMP et al. "Thin-film
magnetic heads excel in packing
and moving data", pages 97-103.

./.

**CLASSIFICATION OF THE APPLICATION (Int. Cl.³)**

G 11 B   5/12
          5/28//
          5/42

**TECHNICAL FIELDS SEARCHED (Int.Cl.³)**

G 11 B 5

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 17-09-1979 | FUX |

EPO Form 1503.1   06.78

European Patent Office

**EUROPEAN SEARCH REPORT**

Application number

EP 79 20 0298

-2-

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| | * From page 102, right-hand column, line 60 to page 103, left-hand column, line 16; figure 10 *<br><br>-- <br><br>US - A - 3 787 963 (GUNTRUM et al. )<br>* Column 2, lines 47-51; column 2, lines 3-16; 33-41 and 63-68; figures 1,2a,2b,2c,3 *<br><br>----- | 3,4,9 | |
| | | | TECHNICAL FIELDS SEARCHED (Int. Cl.²) |

EPO Form 1503.2  06.78